**Europäisches Patentamt**

**European Patent Office**

**Office européen des brevets**

(19)

(11) Veröffentlichungsnummer : **0 166 064**
**B1**

# (12) EUROPÄISCHE PATENTSCHRIFT

(45) Veröffentlichungstag der Patentschrift :
**02.03.88**

(21) Anmeldenummer : **84810317.2**

(22) Anmeldetag : **27.06.84**

(51) Int. Cl.⁴ : **B 24 B 49/16**, B 23 Q 17/09,
B 23 Q 15/12// B28D5/02

(54) Trennschleifmaschine mit einer Messanordnung und Verwendung dieser Messanordnung.

(43) Veröffentlichungstag der Anmeldung :
**02.01.86 Patentblatt 86/01**

(45) Bekanntmachung des Hinweises auf die Patenterteilung : **02.03.88 Patentblatt 88/09**

(84) Benannte Vertragsstaaten :
**CH DE FR GB IT LI NL**

(56) Entgegenhaltungen :
BE-A- 864 717
DE-A- 2 251 333
FR-A- 2 275 820
US-A- 3 680 417
US-A- 4 228 782
INDUSTRIAL DIAMOND REVIEW, Band 22, Nr. 256,
März 1962, Seiten 72-74, London, GB; R.R. COLE u.a.:
"Tool dynamometer for electrolytic grinding
research"
MACHINERY, Band 100, 21. Februar 1962, Seiten 404-
415
PERIODICA POLYTECHNICA, Band 7, Nr. 4, 1963,
Seiten 263-271; A. KARDOS u.a.: "Pneumatically
operated dynamometer for cutting force measurements"
WERKSTATT UND BETRIEB, Band 92, Nr. 5, 1959,
Seiten 259-269; H. PHILIPP: "Über die Schnittkraftkomponenten beim Walzenfräsen und das Fräsen
von Profilen"

(73) Patentinhaber : **Maschinenfabrik Meyer & Burger AG**
**Alte Bernstrasse 146a**
**CH-3613 Steffisburg (CH)**

(72) Erfinder : **Zöbeli, Armin**
**Aumattweg 46**
**CH-3613 Steffisburg (CH)**

(74) Vertreter : **Steiner, Martin et al**
**c/o AMMANN PATENTANWAELTE AG BERN**
**Schwarztorstrasse 31**
**CH-3001 Bern (CH)**

## Beschreibung

Die vorliegende Erfindung betrifft eine Trennschleifmaschine, gemäss Oberbegriff des Anspruchs 1. Solche Trennmaschinen, insbesondere Innentrennsägen, werden eingesetzt zum Trennen von spröden, harten Materialien, wie Halbleitermaterialien, z. B. monokristallinem Silicium. Sie bieten den Vorteil, dass bei minimalen Schnittverlusten hohe Präzision bezüglich Parallelität, Ebenheit und Dickentoleranz erzielt wird. Voraussetzung für diese Vorteile ist jedoch eine dauernde Ueberwachung des Schnittprozesses mit geeigneten zuverlässigen Messvorrichtungen. So ist es beispielsweise bekannt, die Auslenkung der Innentrennscheibe zu erfassen und bei zu hoher Auslenkung Massnahmen zu ergreifen, insbesondere die Innentrennscheibe nachzuspannen oder abzuziehen (EP-A-0 139 067).

Es ist ebenfalls bekannt, die von der Innentrennscheibe auf das Schnittgut wirkende Schnittkraft zu messen und in Abhängigkeit der gemessenen Schnittkraft die Schnittvorschubgeschwindigkeit zu regeln und/oder ein Abziehen der Innentrennscheibe durchzuführen. Aus der US-PS 4 228 782 sind Vorrichtungen zur Erfassung der Schnittkraft bekannt. In einem Falle ist das in Scheiben zu zerschneidende stabförmige Werkstück mit einer Stützleiste an einem Stabende in bekannter Weise befestigt und freitragend angeordnet. Zwischen dieser Befestigungspartie des Stabes und einem in Stabachsenrichtung verschiebbaren Werkstückträgerblock ist ein Messwandler eingebaut. Es ist in diesem Falle schwierig, eine genügend stabile Halterung des Werkstuckes zu erzielen. Da der Abstand der Schnittstelle vom Messwandler bei der Ausführung aufeinanderfolgender Schnitte abnimmt, muss streng genommen für jede Messung eine neue Eichung erfolgen, oder es müssen Mess-Steuersysteme eingesetzt werden, welche den jeweils aktuellen Abstand zwischen Schnitt- und Messstelle berücksichtigen. Aus diesen Gründen können nur Stäbe beschränkter Länge bearbeitet werden. Bei einer anderen Ausführung ist der Messwandler in der Ebene der Trennscheibe angeordnet und die Stützleiste, auf welche der in Scheiben zu zerschneidende Stab aufgeklebt ist, liegt direkt auf dem Messwandler auf. Die Genauigkeit einer solchen Messung ist stark davon abhängig, wie die Einspannung des Stabendes an seinem Werkstückträgerblock erfolgt, und es ist somit sehr schwierig, immer wieder gleiche Verhältnisse zu erzielen. Es ist daher eine neue Eichung für jeden neu eingesetzten Stab erforderlich. Eine genaue Messung der Schnittkräfte setzt im übrigen eine sehr genaue Parallelität der auf dem Messwandler aufliegenden Unterseite der Stützleiste zur Verschieberichtung (Zustellrichtung) des Werkstückes und absolute Ebenheit voraus. Da beide Bedingungen kaum zu erfüllen sind, treten durch das Zustellen des Werkstükkes grosse Toleranzen bezüglich Parallelität und Dicke der Scheiben auf. Je nach Auslegungsmöglichkeiten der flexiblen Werkstückeinspannstelle besteht zudem eine unterschiedliche, dauernde Beeinflussung der Schnittkraftmessresultate.

Es ist zwar auch eine Trennschleifmaschine zum Schneiden von Diamanten bekannt, bei welcher das Werkstück an einer Wippe eingespannt ist, auf welche Wippe ein Linearantrieb über eine Messanordnung eine Bearbeitungskraft ausübt (BE-A-864 717). Die Messanordnung folgt hierbei dem Werkstück während des Schnittvorganges und braucht keine Anforderungen hinsichtlich Genauigkeit der Bewegungsübertragung zu erfüllen. Sie ist denn auch mit einer unter der übertragenen Bearbeitungskraft verformbaren Feder versehen, deren Weg beliebig gross sein kann. Entsprechend kann ein verhältnismässig unempfindlicher Geber verwendet werden.

Ziel der Erfindung ist es, eine Trennschleifmaschine mit quer zur Ebene der Trennscheibe zustellbarem Schnittgut, mit einer einfachen, gegenüber rauhen Umgebungsbedingungen unempfindlichen Messanordnung zu schaffen, welche hohe Mess- und Bearbeitungsgenauigkeit gewährleistet in keiner Weise die Auslegung der Werkstückzustellung und der stabilen Einspannung und Auflage des Werkstückes erschwert, sowie eine die Messung nicht beeinflussende beliebige Orientierung des Werkstücks in horizontaler und vertikaler, Richtung erlaubt. Dieses Ziel wird gemäss dem Kennzeichen des Anspruchs 1 erreicht. Es erfolgt damit eine vollständige Trennung des Bereiches der Werkstückaufnahme und der Schnittkraftmessung, womit eine problemlose Anwendung, auch im 24-Stunden-Produktionsbetrieb, bei minimalen Anforderungen an das Bedienungspersonal, erreicht wird. Die Messanordnung weist an sich hohe Stabilität auf und hat praktisch keinen Einfluss auf die Bearbeitungsgenauigkeit.

Die Erfindung betrifft auch eine Verwendung der beanspruchten Messanordnung bei einer Innentrennsäge, gemäss Anspruch 9. Die Kombination beider Messergebnisse lässt weitergehende Schlüsse, insbesondere hinsichtlich des Zustandes der Trennscheibe zu, was eine optimale Steuerung und Diagnose erlaubt.

Die Erfindung wird nun anhand eines Ausführungsbeispieles und einer Ausführungsvariante, die in der Zeichnung dargestellt sind, näher erläutert.

Figur 1 zeigt einen Vertikalschnitt durch das Ausführungsbeispiel,

Figur 2 zeigt eine Draufsicht auf den eigentlichen Messteil der Anordnung und

Figur 3 zeigt schematisch eine Ausführungsvariante des Messteils.

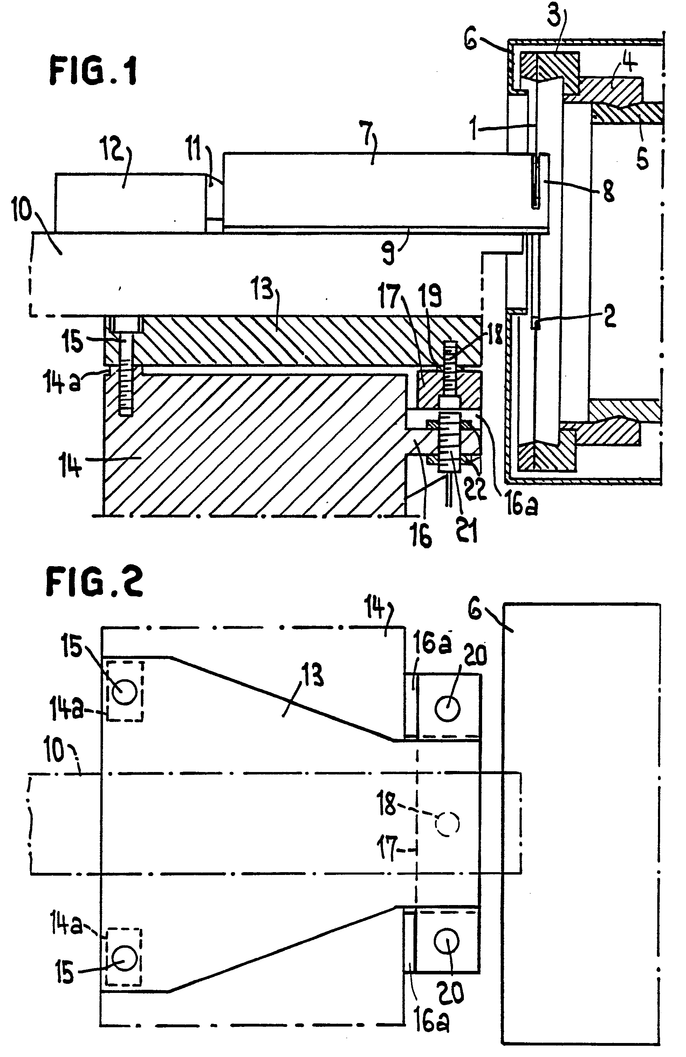

In Figur 1 sind die für den Schnittvorgang und die Messung der Schnittkraft wesentlichen Teile einer Innentrennsäge dargestellt. Die ringförmige Trennscheibe 1 ist an der Innenkante mit einem Diamantbelag 2 versehen und mit seinem Aussenrand in bekannter, nicht näher dargestellter Weise in einen zweiteiligen Spannring 3 gespannt. Dieser Spannring ist mittels eines aerostatischen Lagers mit den Lagerringen 4 und 5 drehbar gelagert und kann durch einen Motor in rasche Drehung versetzt werden. Die Trennscheibenhalterung und -lagerung ist in einem Schutzgehäuse 6 untergebracht.

Gemäss Figur 1 ist die Trennscheibe 1 schon teilweise in ein stabförmiges Werkstück 7 eingedrungen und hat damit eine der herzustellen den Scheiben 8 teilweise freigeschnitten. Die Trennschelbe 1 wirkt mit einer Schnittkraft F auf die Bearbeitungsstelle im Werkstück 7. Das Werkstück ist mit einer Stützleiste oder Sägeunterlage 9 verklebt. Das Werkstück 7 ist auch mit einem Teller 11 eines Werkstück-Trägerblockes 12 verklebt, welcher das Werkstück nach je einem Schnittvorgang um einen Teilschritt zuzustellen, d. h. in Figur 1 nach rechts zu verschieben gestattet, um es in die Position zur Ausführung des nächsten Schnittes zu bringen. Der Werkstück-Trägerblock 12 sowie die Sägeunterlage 9 liegen auf einem Führungstisch 10 auf. Je nach Ausführungsart des Zustellsystemes wird das Werkstück 7 oder der Werkstück-Trägerblock 12 während des Trennvorganges mit dem Führungstisch 10 geklemmt.

Beim Ausführungsbeispiel nach Figur 1 ist angenommen, der Führungstisch 10 sei starr verbunden mit einer Platte 13. Tatsächlich können aber zwischen dem Führungstisch 10 und der Platte 13 Spindeln oder dergleichen Einstellmittel angeordnet sein, um den Führungstisch 10, und damit das Werkstück 7, bezüglich der Ebene der Trennscheibe 1 in eine ganz bestimmte Winkelstellung zu bringen. Diese eventuellen Einstellmittel sind der Einfachheit halber nicht dargestellt, da sie mit der erfindungsgemässen Messvorrichtung nichts zu tun haben, d. h. ihre Anwesenheit beeinflusst die Messeinrichtung nicht, und umgekehrt wird die Einstellung durch die Messvorrichtung nicht beeinflusst.

Die Platte 13 ist mit Augen 14a mit genau bearbeiteten Auflageflächen eines Vertikalschlittens 14 mittels Schrauben 15 verschraubt. Die Auflageflächen der Teile 13 und 14a, sowie die Schraubenkräfte, sind zur Erzielung einer bestimmten hohen Uebergangstabilität dieser Verbindungsstelle bemessen. An der der Trennscheibe 1 zugewandten Seite des Schlittens 14 weist derselbe eine vorstehende Leiste 16 mit erhöhten Auflagern 16a an beiden Enden auf. Auf den Auflagern 16a liegt ein Messstab 17, dessen Mitte mittels einer Schraube 18 mit der Platte 13 fest verschraubt ist. Eine Zwischenlage 19 bestimmt genau die Auflagestelle und Auflagefläche zwischen der Platte 13 und dem Messstab 17. Der Messstab ist auch mit den beiden Auflagern 16a fest verschraubt, und zwar mittels Schrauben 20. In einer Bohrung in der Mitte der Leiste 16 ist ein Messwandler 21 eingesetzt und mittels Muttern 22 in einer Lage gesichert, für welche die obere Stirnseite des Messwandlers in geeignetem Abstand vom Messstab 17 liegt. Es handelt sich vorzugsweise um einen berührungslosen Wegaufnehmer, welcher nach dem Wirbelstrom-Messprinzip arbeitet und mit einer Messschaltung verbunden ist, welche einen Oszillator zur Speisung des Messwandlers 21 sowie eine Auswerteschaltung, beispielsweise einen Demodulator mit Linearisierung und Verstärkung, aufweist. Das von dieser Messschaltung gelieferte Ausgangssgnal ist innerhalb bestimmter Grenzen linear zur Schnittkraft F. Diese Schnittkraft wirkt nämlich über den Führungstisch 10 auf die Platte 13 und bewirkt eine gewisse messbare Aenderung der Verformung des mit dieser Platte verbundenen Messstabes 17. Die je nach Schnittkraft etwas stärkere oder schwächere Durchbiegung des Messstabes 17 wirkt sich auf den Messwandler 21 aus, so dass mit entsprechender Eichung eine genügend genaue Messung der Schnittkraft möglich ist. Das Ausgangssignal der Messschaltung kann verwendet werden für eine digitale oder analoge Anzeige sowie für ein Aufzeichnungsgerät oder eine Auswertung für die Steuerung oder Regelung von Maschinenfunktionen. Die Steifigkeit der Verbindung der Platte 13 mit dem Schlitten 14, die Steifigkeit des Messstabes 17, der Abstand des Messstabes, beziehungsweise Messwandlers von der Verbindungsstelle der Platte 13 und des Schlittes 14, sowie die Lage all dieser Teile bezüglich der Schnittebene sind so bemessen, dass für eine Schnittkraft von 10N in der Ebene der Trennscheibe 1 eine Auslenkung von z. B. 0,2-0,6 μm, vorzugsweise 0,4 μm entsteht. Die Anordnung des Messstabes erfolgt vorzugsweise möglichst nahe der Ebene, in welcher die Trennscheibe 1 angeordnet ist. Die Lage der Verbindungsstelle zwischen der Platte 13 und dem Schlitten 14, in Richtung der Stabachse des Werkstückes 7, wird vorzugsweise so gewählt, dass sich diese Stelle etwa unter dem Schwerpunkt der darauf aufgebauten Teile inklusive Werkstück befindet. Es ist hierbei zu bedenken, dass in Figur 1 der Einstellmechanismus für den Führungstisch 10, der sich im wesentlichen auf der linken Seite, bezogen auf Figur 1, befindet, nicht dargestellt ist. Die an der Verbindungsstelle zwischen der Platte 13 und dem Schlitten 14 wirkende Biegemoment-Aenderung, bzw. die auf den Messstab 17 wirkende Biegemoment-Aenderung ist somit zu einem erheblichen Teil durch die Schnittkraft F bestimmt, was die Genauigkeit und Empfindlichkeit der Messung günstig beeinflusst. Durch die Abstützung der Platte 13 an drei Stellen, nämlich auf den Augen 14a und auf dem Messstab 17, wird eine genügend hohe Stabilität der Abstützung des Führungstisches 10 erzielt, so dass weder statische noch eventuelle dynamische Beanspruchungen, die beim Schnittvorgang auftreten, Bewegungen oder Vibrationen des Werkstückes verursachen, welche sich auf die Schnittqualität negativ auswirken. Trotzdem ist es möglich, die erwähnte Empfindlichkeit der Messung zu erzielen. Das Auflösungsvermögen sollte in der Grössenordnung von 0,1 μm liegen. Der Bereich der zu messenden Schnittkraft liegt etwa zwischen 3N und 100N, so dass der lineare Anzeigebereich des Messsystems mindestens um 6 μm betragen soll. Die Einflüsse durch Aenderung des Werkstückgewichtes, bzw. der Lage des Werkstückes, sowie Temperatureinflüsse werden eliminiert, indem vor Beginn jedes Trennvorganges die Messschaltung auf Null gestellt wird. In diesem Falle sind Temperatureinflüsse während der Schnittzeit von beispielsweise 1-10 Minuten nicht messbar, da die Masse der Elemente relativ gross ist und die Messstelle von der sich erwärmenden Schnittstelle recht weit entfernt ist. Bedingt durch die Aenderung des Werkstückgewichts von beispielsweise maximal 50-60 kg sowie von Temperatureinflüssen sollte der totale Messbereich ca. 0,2 mm betragen, damit ein Nachstellen des Messwandlers nicht erforderlich ist.

Zum Eichen der Messvorrichtung kann in der Schnittebene an den Werkstückstab ein Gewicht von beispielsweise 10N angehängt werden. Das vorher auf Null gestellte Messgerät zeigt nun den Messwert für dieses Gewicht an. Die Empfindlichkeit kann nun eingestellt werden, so dass die Normkraft von beispielsweise 10N einen bestimmten Ausschlag von beispielsweise 4 mm auf einem Aufzeichnungsgerät ergibt. Eine Nacheichung der Vorrichtung wäre beispielsweise erforderlich, wenn der Messteil, bestehend aus der Platte 13, dem Messstab 17 und den Verschraubungen mit dem Schlitten 14 demontiert und wieder montiert würde. In diesem Falle würde mit grosser Wahrscheinlichkeit die Biegesteifigkeit der Verschraubungen verändert, was eine Nacheichung erfordert.

Es können andere Messwandler angewendet werden, beispielsweise auf dem Messstab 17 angebrachte Dehnungmessstreifen oder ein induktiver Messtaster, welcher in der Leiste 16 montiert ist und den Messstab 17 in der Mitte berührt zwecks Messen der Veränderung der Durchbiegung.

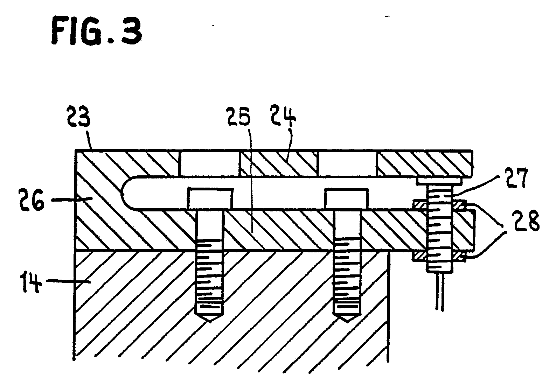

Eine weitere Variante des Messteils ist in Figur 3 dargestellt. An Stelle der mit dem Schlitten 14 verschraubten Platte 13 ist eine stimmgabelartige Messplatte 23 mit plattenförmigen Schenkeln 24 und 25 und einem diese Schenkel verbindenden Joch 26 einteilig ausgeführt. Der untere Schenkel 25 ist mit der ebenen Oberseite des Schlittens 14 verschraubt. Auf dem oberen Schenkel ist in nicht dargestellter Weise der Führungstisch 10 montiert. Zwischen die freitragenden Enden der Schenkel 24 und 25 ist in diesem Falle ein piezoelektrischer Messwandler 27 spielfrei und unter bestimmter Vorspannung eingesetzt und mittels Muttern 28 gesichert.

Auf die Anwendungsmöglichkeiten der Schnittkraftmessung ist schon hingewiesen worden. Man kann beispielsweise die Vorschubbewegung des Schlittens 14 so regeln, dass eine konstante oder nach einer bestimmten vorgegebenen Funktion verlaufende Schnittkraft während jedes Schnittvorganges auftritt. Die Schnittkraftmessung kann aber auch nur der Ueberwachung dienen, indem beim Auftreten von extrem hohen oder niedrigen Schnittkräften automatisch oder manuell eingegriffen wird.

Eine besonders vorteilhafte Anwendung besteht darin, ausser der Schnittkraft auch die Trennscheibenauslenkung zu erfassen, um anhand beider Ergebnisse den Schnittvorgang zu steuern und/oder eine Diagnose zu stellen. Ein weiterer Vorteil kann sich bei dieser Anwendung daraus ergeben, dass gleichartige Messwandler verwendet werden, um die Durchbiegung des Messstabes 17 bzw. des Messteils 23 und die Auslenkung der Trennscheibe 1 zu erfassen, indem dann Teile der Messschaltung, beispielsweise der Oszillator, gemeinsam zum Betrieb beider Messwandler dienen können.

Wird die Schnittvorschubbewegung nicht durch einen Schlitten 14 dem Werkstück sondern der Trennscheibe erteilt, kann der elastisch verformbare Messteil vorzugsweise zwischen dem Führungstisch 10 und einem während der Bearbeitung ortsfesten Träger des Maschinenbetters, oder aber zwischen der Trennscheibenlagerung und einem dieselbe tragenden Vorschubschlitten angeordnet sein.

## Patentansprüche

1. Trennschleifmaschine mit einer rotierenden Trennscheibe (1) und mit einer Messanordnung zur Erfassung der von der Trennscheibe auf das Schnittgut wirkenden Schnittkraft, wobei das Schnittgut quer zur Ebene der Trennscheibe zustellbar auf einem Führungstisch angebracht ist, und wobei mindestens ein Messwandler zur Messung der Schnittkraft vorgesehen ist, dadurch gekennzeichnet, dass der Messwandler (21, 27) zum Erfassen der Verformung eines den Führungstisch (10) tragenden Messteils angeordnet ist, welcher Messteil eine obere, mit dem Führungstisch verbundene Platte (13) oder einen oberen Schenkel (24) aufweist, die bzw. der im Abstand über einem unteren Teil (14) oder unteren Schenkel (25) angeordnet ist, wobei die Platte (13) und der untere Teil (14) bzw. die beiden Schenkel (24, 25) an ihrem von der Ebene der Trennscheibe (1) entfernten Ende mit definierter Elastizität verbunden sind und das der Ebene der Trennscheibe (1) benachbarte Ende der Platte (13) bzw. des oberen Schenkels (24) auf den Messwandler (21, 27) wirkt.

2. Maschine nach Anspruch 1, dadurch gekennzeichnet, dass die Platte (13) des Messteils zwischen den Führungstisch (10) und einen die Schnittvorschubbewegung erzeugenden Schlitten (14) oder einen ortsfesten Träger eingebaut ist.

3. Maschine nach Anspruch 2, dadurch gekennzeichnet, dass zwischen dem Führungstisch (10) und dem Messteil (13, 14) Einstellmittel und Spindeln angeordnet sind, um den Führungstisch (10), und damit das Werkstück (7), bezüglich der Ebene der Trennscheibe (1) in eine bestimmte Winkelstellung zu bringen.

4. Maschine nach einem der Ansprüche 1-3, dadurch gekennzeichnet, dass sich die freitragende Seite der Platte (13) auf einen Messstab (17) abstützt, der seinerseits auf den Messwandler (21) wirkt.

5. Maschine nach einem der Ansprüche 1-4, dadurch gekennzeichnet, dass die auf den Messwanler wirkende Verformung um 0,2 bis 0,6 μm, vorzugsweise um 0,4 μm pro 10N Schnittkraft bemessen ist.

6. Maschine nach einem der Ansprüche 1-5, dadurch gekennzeichnet, dass die elastische Verbindungsstelle (14a, 26) zwischen der oberen Platte (13) bzw. dem oberen Schenkel (24) und dem untern Teil (14) bzw. dem unteren Schenkel (25) mindestens annähernd unter dem Schwerpunkt des Führungstischs (10) und der damit verbundenen Teile (7, 12) liegt.

7. Maschine nach einem der Ansprüche 1-6, gekennzeichnet durch Mittel zum Nullabgleich zwischen aufeinanderfolgenden Schnittvorgängen.

8. Maschine nach einem der Ansprüche 1-7, dadurch gekennzeichnet, dass als Messwandler (21, 27) ein Wirbelstromwandler, ein induktiver Wandler, ein piezoelektrischer oder kapazitiver Wandler, ein optischer Wandler oder Dehnungsmessstreifen vorgesehen ist bzw. sind.

9. Verwendung der Messanordnung nach einem der Ansprüche 1-8 bei einer Innentrennsäge, dadurch gekennzeichnet, dass ausser der Schnittkraft die Trennscheibenauslenkung aus ihrer Ebene mit einem anderen, bereits bekannten Messsystem erfasst, und anhand beider Ergebnisse der Schnittvorgang gesteuert und/oder eingestellt wird.

10. Verwendung nach Anspruch 9, dadurch gekennzeichnet, dass mindestens Teile der Messschaltung für beide Messungen verwendet werden.

11. Verwendung insbesondere nach Anspruch 9 oder 10, dadurch gekennzeichnet, dass zur Optimierung des Schneidvorgangs die Schnittgeschwindigkeit und/oder die Schnittvorschubgeschwindigkeit verändert und/oder ein Abziehen der Trennscheibe vorgenommen wird, wobei all diese Vorgänge automatisch oder manuell durchgeführt werden.

## Claims

1. An annular saw with a rotary slicing blade (1) and with a measuring device for detecting the cutting force exerted on the workpiece by the slicing blade, the workpiece being fed perpendicularly to the plane of the slicing blade on a guiding table, and at least a transducer being provided for measuring the cutting force, characterized in that the transducer (21, 27) is arranged for detecting the deformation of a measuring part supporting the guiding table, this measuring part comprising an upper plate (13) connected to the guiding table or an upper branch (24), said plate or said branch being arranged at a distance of a bottom part (14) or of a bottom branch (25), the plate (13) and the bottom part (14), resp. both branches (24, 25) being connected with a definite elasticity at their extremity distant from the plane of the slicing blade (1) and in that the extremity of the plate (13), resp. of the upper branch (24) near the plane of the slicing blade (1) acts on the transducer (21, 27).

2. A saw according to claim 1, characterized in that the plate (13) of the measuring part is mounted between the guiding table (10) and a slide (14) producing the cutting feed motion, or a stationary support.

3. A saw according to claim 2, characterized in that adjusting means and shafts are arranged between the guiding table and the measuring part (13, 14) for setting the guiding table and consequently the workpiece (7) in a determined angular position with respect to the plane of the slicing blade (1).

4. A saw according to one of the claims 1 to 3, characterized in that the overhanging part of the plate (13) rests on a measuring bar (17) acting itself on the transducer (21).

5. A saw according to one of the claims 1 to 4, characterized in that the deformation acting on the transducer is of .2 to .6 μm, preferably .4 μm for a cutting force of 10N.

6. A saw according to one of the claims 1 to 5, characterized in that the elastic connecting place (14a, 26) between the upper plate (13), resp. the upper branch (24) and the bottom part (14), resp. the bottom branch (25) is at least approximately located under the centre of gravity of the guiding table (10) and of the pieces (7, 12) connected to it.

7. A saw according to one of the claims 1 to 6, characterized by zero compensation means between the successive slicing processes.

8. A saw according to one of the claims 1 to 7, characterized in that the transducer (21, 27) is an eddy current transducer, inductive transducer, piezoelectric or capacitive transducer, optical transducer or a strain gauge.

9. Utilization of the measuring device according to one of the claims 1 to 8 in an annular saw with an inside diameter blade, characterized in that in addition to the cutting force, an other known measuring device measures the excursion of the inside diameter blade in its plane in order to control or adjust the cutting process from both results.

10. Utilization according to claim 9, characterized in that at least parts of the measuring circuit are utilized for both measures.

11. Utilization, more particularly according to claim 9 or 10, characterized in that for optimizing the cutting process, the cutting speed and/or the speed of the cutting feed is modified and/or the slicing blade is retracted, all of these processes being executed automatically or manually.

## Revendications

1. Tronçonneuse avec un disque tronçonneur rotatif (1) et avec un dispositif de mesure pour détecter l'effort de coupe exercé sur la pièce à tronçonner par le disque tronçonneur, la pièce à tronçonner étant amenée perpendiculairement au plan du disque tronçonneur sur une table de guidage, et au moins un transducteur étant prévu pour mesurer l'effort de coupe, caractérisée en ce que le transducteur (21, 27) est disposé pour détecter la déformation d'une partie de mesure supportant la table de guidage, cette partie de mesure comprenant une plaque supérieure (13) liée à la table de guidage ou une branche supérieure (24), ladite plaque ou ladite branche étant disposée espacée d'une partie inférieure (14) ou d'une branche inférieure (25), la plaque (13) et la partie inférieure (14), resp. les deux branches (24, 25) étant connectées avec une élasticité définie à leur extrémité éloignée du plan du disque tronçonneur (1) et en ce que l'extrémité de la plaque (13), resp. de la branche supérieure (24) voisine du plan du disque tronçonneur (1) agit sur le transducteur (21, 27).

2. Tronçonneuse selon la revendication 1, caractérisée en ce que la plaque (13) de la partie de mesure est montée entre la table de guidage (10) et une glissière (14) produisant le mouvement d'avance de coupe, ou un support stationnaire.

3. Tronçonneuse selon la revendication 2, caractérisée en ce que des moyens de réglage et des arbres sont disposés entre la table de guidage (10) et la partie de mesure (13, 14) pour mettre la table de guidage (10) et en conséquence la pièce à tronçonner (7) dans une position angulaire déterminée par rapport au plan du disque tronçonneur (1).

4. Tronçonneuse selon l'une des revendications 1 à 3, caractérisée en ce que la partie en saillie de la plaque (13) repose sur une barre de mesure (17) qui agit elle-même sur le transducteur (21).

5. Tronçonneuse selon l'une des revendications 1 à 4, caractérisée en ce que la déformation agissant sur le transducteur est de 0,2 à 0,6 μm,

de préférence 0,4 μm pour un effort de coupe de 10N.

6. Tronçonneuse selon l'une des revendications 1 à 5, caractérisée en ce que l'endroit de liaison élastique (14a, 26) entre la plaque supérieure (13), resp. la branche supérieure (24) et la partie inférieure (14), resp. la branche inférieure (25) se trouve au moins approximativement sous le centre de gravité de la table de guidage (10) et des pièces (7, 12) liées à cette dernière.

7. Tronçonneuse selon l'une des revendications 1 à 6, caractérisée par des moyens de compensation à zéro entre les processus de tronçonnage successifs.

8. Tronçonneuse selon l'une des revendications 1 à 7, caractérisée en ce que le transducteur (21, 27) est un transducteur à courants de Foucault, inductif, piézo-électrique ou capacitif, optique ou une jauge de contrainte.

9. Utilisation du dispositif de mesure selon l'une des revendications 1 à 8 dans une tronçonneuse à disque tronçonneur annulaire, caractérisée en ce qu'en plus de l'effort de coupe, un autre dispositif de mesure connu mesure l'excursion du disque tronçonneur dans son plan afin de commander et/ou régler le processus de coupe à partir des deux résultats.

10. Utilisation selon la revendication 9, caractérisée en ce qu'au moins des parties du circuit de mesure sont utilisées pour les deux mesures.

11. Utilisation, en particulier selon la revendication 9 ou 10, caractérisée en ce que pour optimaliser le processus de coupe, la vitesse de coupe et/ou la vitesse d'avance de coupe est modifiée et/ou le disque tronçonneur est retiré, tous ces processus étant exécutés automatiquement ou manuellement.

FIG.1

FIG.2

# FIG.3